# EUROPÄISCHE PATENTSCHRIFT

(11) **EP 2 987 967 B1**
(45) Veröffentlichungstag und Bekanntmachung des Hinweises auf die Patenterteilung: **22.02.2017**
(21) Anmeldenummer: 14181600.9
(22) Anmeldetag: 20.08.2014
(51) Int. Cl.: F01D 25/24, F04D 27/02, F02C 6/08

(54) **Verdichtergehäuse für eine Gasturbine**
Compressor housing for a gas turbine
Carter de compresseur pour une turbine à gaz

(43) Veröffentlichungstag der Anmeldung: 24.02.2016
(73) Patentinhaber: Siemens Aktiengesellschaft, 80333 München (DE)
(72) Erfinder: Benkler, Francois, 40880 Ratingen (DE); Klumpp, Stephan, 40822 Mettmann (DE)

(56) Entgegenhaltungen:
- EP-A1- 0 638 725
- EP-A2- 0 741 234
- EP-A2- 2 428 648
- FR-A- 1 012 339
- US-A1- 2009 047 126

## Beschreibung

Die Erfindung betrifft ein Verdichtergehäuse für eine Gasturbine mit einer von einem Verdichtereintritt zu einem Verdichteraustritt gerichteten Hauptströmungsrichtung, umfassend eine einen Hauptströmungskanal umschließende Verdichterwand, eine sich von dem Hauptströmungskanal durch die Verdichterwand getrennt angeordnete Luftentnahmeblase, wobei Hauptströmungskanal und Luftentnahmeblase durch einen in der Verdichterwand angeordneten, in Umfangsrichtung verlaufenden Spalt verbunden sind.

Eine Gasturbine ist eine Strömungsmaschine, in der ein unter Druck stehendes Gas expandiert. Sie besteht aus einer Turbine oder Expander, einem vorgeschalteten Verdichter und einer zwischengeschalteten Brennkammer. Das Wirkungsprinzip beruht auf dem Kreisprozess (Joule-Prozess): Dieser komprimiert über die Beschaufelung einer oder mehrerer Verdichterstufen Luft, mischt diese anschließend in der Brennkammer mit einem gasförmigen oder flüssigen Treibstoff, zündet und verbrennt.

So entsteht ein Heißgas (Mischung aus Verbrennungsgas und Luft), das im nachfolgenden Turbinenteil entspannt, wobei sich thermische in mechanische Energie umwandelt und zunächst den Verdichter antreibt. Der verbleibende Anteil wird beim Wellentriebwerk zum Antrieb eines Generators, eines Propellers oder anderen rotierenden Verbrauchern verwendet. Beim Strahltriebwerk dagegen beschleunigt die thermische Energie den heißen Gasstrom, was den Schub erzeugt.

Aufgrund der hohen Temperaturen in der Turbine ist es erforderlich, die dort dem heißen Gasstrom ausgesetzten Bauteile wie die Turbinenschaufeln zu kühlen. Dies geschieht durch Kühlluft, die in verschiedener Weise (Prallkühlung, Filmkühlung) zur Kühlung eingesetzt wird. Die dafür benötigte, mit entsprechend hohem Druck vorliegende Kühlluft wird dabei aus dem Verdichter entnommen, der eine ohnehin in der Gasturbine vorliegende Quelle für Luft verschiedener Hochdruckstufen darstellt.

Diese Luft wird in so genannten Entnahmeblasen, die um den Verdichter angeordnet sind und über einen Spalt mit dem Hauptströmungskanal im Verdichter verbunden sind, gesammelt und dann in mehreren Leitungen zur Turbine geführt. Um die Turbine zu kühlen, muss dabei gewährleistet sein, dass der Druck an der Entnahmestelle höher ist als an der Einblasestelle in der Turbine. Zudem muss der Überdruck an der Entnahmestelle ausweichen, um genügend Massenstrom gegen den Druckverlust in den Leitungen zu fördern.

Jeder Druckverlust auf dem Weg zwischen Entnahme aus dem Verdichter bis zum Einblasen in die Turbine stellt einen direkten Verlust von Gasturbinenleistung dar, da Arbeit, die für das Verdichten verwandt wurde, als Verlust dissipiert. Dies reduziert den Wirkungsgrad der Gasturbine.

So ist beispielsweise aus der EP 0 741 234 A2 ein Radialdiffusor für zu entnehmender Kühlluft bei einer axialen Turbomaschine bekannt, bei dem ein Führungsblech den entnommenen Strom in die Anzapfkammer längs der .Kammerwand führt. Daneben ist aus der EP 0 638 725 A1 ein ringförmiger Entnahmekanal bekannt, dessen Wände divergent von der Entnahmestelle hin zur Entnahmekammer sich aufweiten. Ein anderes Verdichtergehäuse nach dem Stand der Technik ist aus FR 1 042 339 A bekannt.

Es ist daher Aufgabe der Erfindung, ein Verdichtergehäuse der eingangs genannten Art anzugeben, welches einen besonders hohen Wirkungsgrad der Gasturbine ermöglicht.

Diese Aufgabe wird erfindungsgemäß gelöst, indem a) die verdichteraustrittsseitige Wandung des Spalts in die verdichteraustrittsseitige Wandung der Luftentnahmeblase übergeht oder b) die verdichtereintrittsseitige Wandung des Spalts in die verdichtereintrittsseitige Wandung der Luftentnahmeblase übergeht.

Die Erfindung geht dabei von der Überlegung aus, dass neben den eigentlichen Leitungen für die Kühlluft inklusive der Ventile eine weitere Quelle für Verluste die Einströmung in die Entnahmeblase am Verdichter ist: Es hat sich herausgestellt, dass beim Einströmen der Luft in die Entnahmeblase ein Großteil des dynamischen Druckes dissipiert und somit verloren geht. Durch diesen Effekt geht also ein Großteil der Energie, die in der radialen Geschwindigkeitskomponente steckt, verloren. Die Summe dieser Verluste ist ähnlich groß wie der Druckverlust in dem anschließenden Rohrsystem bis zur Turbine. Es gibt bisher keine Maßnahmen um diese Verluste zu minimieren. Die Dissipation des gesamten dynamischen Drucks wird eingenommen. Für eine besonders einfache Rückgewinnung dieses bislang verlorenen dynamischen Drucks sollten konstruktive Änderungen an der Entnahmeblase vorgenommen werden, die eine Umwandlung des vorhandenen dynamischen Drucks in statischen Druck ermöglichen. Dies wird dadurch erreicht, dass die verdichteraustrittsseitige, d. h. die stromab im Hauptströmungskanal angeordnete Wandung des sich hauptsächlich in Umfangsrichtung erstreckenden Spalts stufenfrei in die verdichteraustrittsseitige Wandung der Luftentnahmeblase übergeht oder dass die verdichtereintrittsseitige, d. h. die stromauf im Hauptströmungskanal angeordnete Wandung des Spalts stufenfrei in die verdichtereintrittsseitige Wandung der Luftentnahmeblase übergeht. Mit anderen Worten: Die relative axiale Position von Spalt und Luftentnahmeblase zueinander wird so verändert, dass eine axiale Wandung des Spalts direkt in die entsprechende axiale Wandung der Entnahmeblase übergeht. Dies bedeutet einerseits einen stetigen und stufenfreien Übergang im Längsschnitt der beiden Wandungen ineinander, und andererseits eine Verschiebung der bisher in axialer Richtung mittigen Verbindung zwischen Hauptströmungskanal und Entnahmeblase in Richtung der verdichteraustrittsseitigen oder verdichtereintrittsseitigen Wandung der Entnahmeblase, d. h. stromab bzw. stromauf, so dass die verdichteraustrittsseitige bzw. -eintrittsseitige Wandung der Entnahmeblase und die verdichteraustrittsseitige bzw. -eintrittsseitige Wandung des Spalts axial weitestgehend und insbesondere vollständig versatzfrei angeordnet sind.

Zudem geht in Fall a) die verdichtereintrittsseitige bzw. in Fall b) die verdichteraustrittsseitige Wandung des Spalts in eine in der Entnahmeblase angeordnete, sich im Wesentlichen in radialer Richtung erstreckende Führungslippe über. Die Führungslippe bildet dabei in Fortsetzung des Spaltes einen Strömungskanal, in dem die ausströmende Verdichterluft geführt wird, ist also somit auch entsprechend der Breite des Spaltes in Umfangsrichtung erstreckt. In radialer Richtung ragt sie in das Volumen der Entnahmeblase hinein und teilt dieses somit im radial inneren Bereich in zwei Teile, nämlich den Strömungskanal und den Restraum der Entnahmeblase. Die Führungslippe kann dabei als Blech ausgeführt sein.

Die Führungslippe und ihre im Folgenden beschriebenen vorteilhaften Ausführungsformen sind dabei grundsätzlich auch unabhängig von der Positionierung den Spaltes in axialer Richtung verwendbar, d. h. auch bei einer in axialer Richtung mittig in der Entnahmeblase angeordneten Mündung des Spaltes kann eine derartige Führungslippe ebenso vorhanden sein. Es können hierbei auch zwei Führungslippen angedacht sein, nämlich eine zusätzliche Führungslippe analog in Verlängerung der verdichtereintrittsseitigen Wandung des Spalts, die in der Entnahmeblase angeordnet ist, und sich im Wesentlichen in radialer Richtung erstreckt.

Weiter vergrößert sich der Abstand der Führungslippe von der in Fall a) verdichteraustrittsseitigen bzw. in Fall b) verdichtereintrittsseitigen Wandung der Luftentnahmeblase in radialer Richtung nach außen. Der zwischen Führungslippe und verdichteraustrittsseitiger bzw. verdichtereintrittsseitiger Wandung gebildete Strömungskanal bildet somit durch den sich nach außen erweiternden Längsschnitt eine Diffusorstrecke, in der sich die Strömung der Kühlluft kontrolliert verlangsamt und somit der dynamische Druck in statischen Druck umgewandelt wird. Dadurch kann ein großer Teil des bisherigen Druck- und somit Energieverlustes vermieden werden.

Hierbei ist die Mündung des Spalts in die Entnahmeblase vorteilhafterweise in Fall a) im verdichteraustrittsseitigen bzw. in Fall b) im verdichtereintrittsseitigen Drittel der Entnahmeblase angeordnet. Mit anderen Worten: Bildet man also einen Längsschnitt durch die Entnahmeblase, d. h. einen Schnitt mit einer axial-radialen Schnittebene durch die Entnahmeblase, und unterteilt das Profil in drei in axialer Richtung gleich lange Teile, so ist die Mündung des Spalts, d. h. der Verbindung zwischen Hauptströmungskanal im Verdichter und Entnahmeblase in einem axialen Endteil angeordnet, d. h. dem am weitesten (in Fall a) ) stromab bzw. (in Fall b)) stromauf liegenden Teil.

Noch vorteilhafter ist die Mündung des Spalts in die Entnahmeblase in Fall a) im verdichteraustrittsseitigen bzw. im Fall b) im verdichterintrittsseitigen Viertel der Entnahmeblase angeordnet, wobei dieses analog zum oben beschriebenen Drittel definiert ist.

Die Führungslippe erstreckt sich dabei vorteilhafterweise über zumindest die Hälfte der radialen Ausdehnung der Luftentnahmeblase. Mit anderen Worten: Bildet man einen Längsschnitt durch die Entnahmeblase und unterteilt das Profil in zwei in radialer Richtung gleich lange Teile, so erstreckt sich die Führungslippe, d. h. damit der Strömungskanal in Verlängerung des Spaltes mindestens in dem dem Hauptströmungskanäl näher liegenden Teil. Hierdurch wird eine ausreichende Länge der beschriebenen Diffusorstrecke gewährleistet, um deren gewünschte Wirkung zu erzielen.

In weiterer vorteilhafter Ausgestaltung ist zwischen Führungslippe und in Fall a) verdichteraustrittsseitiger bzw. in Fall b) verdichtereintrittsseitiger Wandung der Luftentnahmeblase eine Anzahl von gekrümmten Strömungsleitblechen angeordnet, deren radial innerer Endabschnitt in Umfangsrichtung ausgerichtet ist und deren radial äußerer Endabschnitt in radialer Richtung ausgerichtet ist. Die Strömungsleitbleche dienen dazu, in Umfangsrichtung gerichtete Geschwindigkeitskomponenten des Luftstroms aus dem Verdichter in radiale Richtung umzulenken. Hierzu sind die jeweiligen Endabschnitte des jeweiligen Strömungsleitblechs wie beschrieben ausgerich tet, dazwischen bilden die Strömungsleitbleche einen möglichst glatten gekrümmten Verlauf. Die Strömungsleitbleche erstrecken sich dabei in axialer Richtung zwischen verdichteraustrittsseitiger Wandung der Luftentnahmeblase und Führungslippe, d. h. in der gesamten Diffusorstrecke. Entsprechend sind bei einer Ausbildung mit zwei Führungslippen vorteilhafterweise die entsprechenden Strömungsleitbleche zwischen den Führungslippen angeordnet.

In besonders vorteilhafter Ausgestaltung ist die Führungslippe mit der Verdichterwand verschraubt. Hierdurch ergibt sich eine besonders einfache technische Realisierung, da die Führungslippe gegebenenfalls zusammen mit den beschriebenen Strömungsleitblechen an die äußere Verdichterwand geschraubt werden kann.

In weiterer vorteilhafter Ausgestaltung erstreckt sich die Luftentnahmeblase im Wesentlichen torusförmig um den Hauptströmungskanal, d. h. sämtliche oben in Bezug auf den Längsschnitt der Luftentnahmeblase beschriebenen Eigenschaften sind entlang des gesamten Umfangs gleich. Der Längsschnitt der Luftentnahmeblase ändert sich entlang des Umfangs somit nicht.

Entsprechend erstreckt sich vorteilhafterweise die Führungslippe um den gesamten Umfang des Verdichters. Sie ist also ringscheibenförmig ausgebildet.

In weiterer vorteilhafter Ausgestaltung des Verdichtergehäuses ist die verdichteraustrittsseitige Wandung des Spalts im Längsschnitt in Richtung des Verdichteraustritts geneigt. Mit anderen Worten: Der Spalt ist derart ausgerichtet, dass ein möglichst geringer Winkel seiner verdichteraustrittsseitigen Wandung zur axialen Geschwindigkeitskomponente der verdichteten Luft im Hauptströmungskanal gegeben ist. Hierdurch wird eine Einströmung in den Spalt erleichtert und es treten beim Eintritt geringere Strömungsverluste auf. Da sich diese Ausgestaltung der Spaltneigung auf die Strömungsrichtung im Hauptströmungskanal bezieht, ist die Neigung für beide Fälle
a) und b) identisch vorzusehen.

Ein Verdichter für eine Gasturbine umfasst vorteilhafterweise ein beschriebenes Verdichtergehäuse.

Eine Gasturbine umfasst vorteilhafterweise einen derartigen Verdichter.

Eine Kraftwerksanlage umfasst vorteilhafterweise eine derartige Gasturbine.

Die mit der Erfindung erzielten Vorteile bestehen insbesondere darin, dass durch die axiale Verschiebung der Einströmung in die Entnahmeblase eines Verdichters und durch Anbringen einer Führungslippe, die am Eintritt in die Entnahmeblase einen Diffusor bildet, dynamischer Druck aus der radialen Geschwindigkeitskomponente zurück gewonnen werden kann, so dass die Verluste-bei der Entnahme von Luft aus dem Verdichter minimiert werden. Der Maschinenwirkungsgrad wird dadurch verbessert.

Die Erfindung wird anhand einer Zeichnung näher erläutert. Darin zeigen:
- FIG 1: einen teilweisen Längsschnitt durch eine Gasturbine,
- FIG 2: einen Längsschnitt durch eine Entnahmeblase nach dem Stand der Technik mit Darstellung der Strömungsverhältnisse,
- FIG 3: eine perspektivische Ansicht der Entnahmeblase aus FIG 2 mit Darstellung der Strömungsverhältnisse,
- FIG 4: einen Längsschnitt durch eine Entnahmeblase mit durch eine Führungslippe gebildeter Diffusorstrecke am Eintritt, die in axialer Richtung verdichteraustrittsseitig angeordnet ist,
- FIG 5: einen Querschnitt durch die Gasturbine auf axialer Höhe der Diffusorstrecke, und
- FIG 6: einen Längsschnitt durch eine Entnahmeblase mit durch eine Führungslippe gebildeter Diffusorstrecke am Eintritt, die in axialer Richtung verdichtereintrittsseitig angeordnet ist.

Gleiche Teile sind in allen Figuren mit denselben Bezugszeichen versehen.

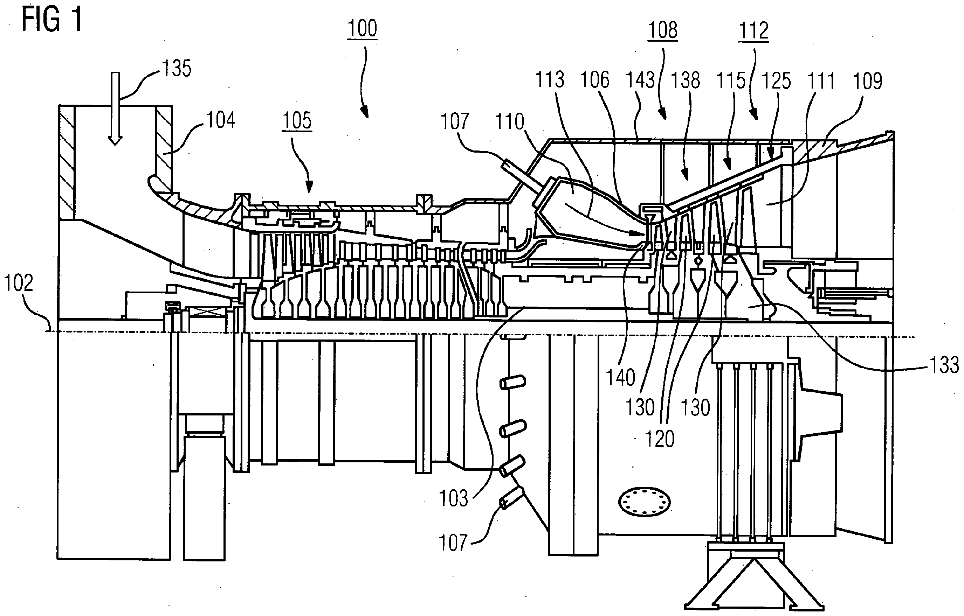

Die FIG 1 zeigt eine Gasturbine 100 in einem Längsteilschnitt. Eine Gasturbine 100 ist eine Strömungsmaschine, welche die innere Energie (Enthalpie) eines strömenden Fluids (Flüssigkeit oder Gas) in Rotationsenergie und letztlich in mechanische Antriebsenergie umwandelt.

Die Gasturbine 100 weist im Inneren einen um eine Rotationsachse 102 (Axialrichtung) drehgelagerten Rotor 103 auf, der auch als Turbinenläufer bezeichnet wird. Sofern im Folgenden oder auch im vorhergehenden Beschreibungstext die Begriffe axial, radial, Umfangsrichtung oder vergleichbare Begriffe verwendet werden, so beziehen diese sich stets auf die Rotationsachse 102 der Gasturbine 100.

Entlang des Rotors 103 folgen aufeinander ein Ansauggehäuse 104, ein Verdichter 105, eine torusartige Brennkammer 106, hier eine Ringbrennkammer, mit mehreren koaxial angeordneten Brennern 107, eine Turbine 108 und das Abgasgehäuse 109. Die Brenner 107 umfassen dabei jeweils einen nicht näher gezeigten Pilotbrenner, der zur Erhöhung der Flammenstabilität insbesondere im Teillastbereich dient.

Die Ringbrennkammer 106 kommuniziert mit einem ringförmigen Hauptströmungskanal 111. Dort bilden beispielsweise vier hintereinander geschaltete Turbinenstufen 112 die Turbine 108. Jede Turbinenstufe 112 ist aus zwei Schaufelringen gebildet.

In Strömungsrichtung eines Arbeitsmediums 113 gesehen folgt im Hauptströmungskanal 111 einer Leitschaufelreihe 115 eine aus Laufschaufeln 120 gebildete Reihe 125. Die Schaufeln 120, 130 sind leicht gekrümmt profiliert, ähnlich einer Flugzeugtragfläche.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. Die Laufschaufeln 120 bilden somit Bestandteile des Rotors oder Läufers 103. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 106 verbrannt. Von dort aus strömt das Arbeitsmedium 113 entlang des Hauptströmungskanals 111 vorbei an den Leitschaufeln 130 und den Laufschaufeln 120.

Dem Fluidstrom wird durch die möglichst wirbelfreie laminare Umströmung der Turbinenschaufeln 120, 130 ein Teil seiner inneren Energie entzogen, der auf die Laufschaufeln 120 der Turbine 108 übergeht. Über diese wird dann der Rotor 103 in Drehung versetzt, wodurch zunächst der Verdichter 105 angetrieben wird. Die nutzbare Leistung wird an die nicht dargestellte Arbeitsmaschine abgegeben.

Die dem heißen Arbeitsmedium 113 ausgesetzten Bauteile unterliegen während des Betriebes der Gasturbine 100 thermischen Belastungen. In der Gasturbine 100 herrschen Temperaturen von bis zu 1500 Grad Celsius, da höhere Temperaturen einen besseren Wirkungsgrad bedeuten. Die Leitschaufeln 130 und Laufschaufeln 120 insbesondere der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Die hohen Belastungen machen höchstbelastbare Werkstoffe erforderlich. Die Turbinenschaufeln 120, 130 werden daher aus Titan-Legierungen, Nickel-Superlegierung oder Wolfram-Molybdän-Legierungen gefertigt.

Die Schaufeln 120, 130 werden für höhere Resistenz gegen Temperaturen sowie Erosion wie zum Beispiel Lochfraß, auch bekannt unter "pitting corrosion", durch Beschichtungen gegen Korrosion (MCrAlX; M = Fe, Co, Ni, Seltene Erden) und Wärme (Wärmedämmschicht, beispielsweise Zr02, Y204-Zr02) geschützt. Die Beschichtung zur Hitzeabschirmung wird Thermal Barrier Coating bzw. kurz TBC genannt. Weitere Maßnahmen, um die Schaufeln hitzeresistenter zu machen, bestehen in ausgeklügelten Kühlkanalsystemen. Diese Technik wird sowohl in den Leit- als auch in den Laufschaufeln 120, 130 angewendet.

Jede Leitschaufel 130 weist neben dem eigentlichen Schaufelblatt einen auch als Plattform 144 bezeichneten, dem Innengehäuse 138 der Turbine 108 zugewandten Leitschaufelfuß und einen dem Leitschaufelfuß gegenüberliegenden Leitschaufelkopf auf. Der Leitschaufelkopf ist dem Rotor 103 zugewandt und an einem Innenring 140 des Stators 143 festgelegt. Jeder Innenring 140 umschließt dabei die Welle des Rotors 103. Ebenso weist jede Laufschaufel einen derartigen Laufschaufelfuß auf, endet jedoch in einer Laufschaufelspitze.

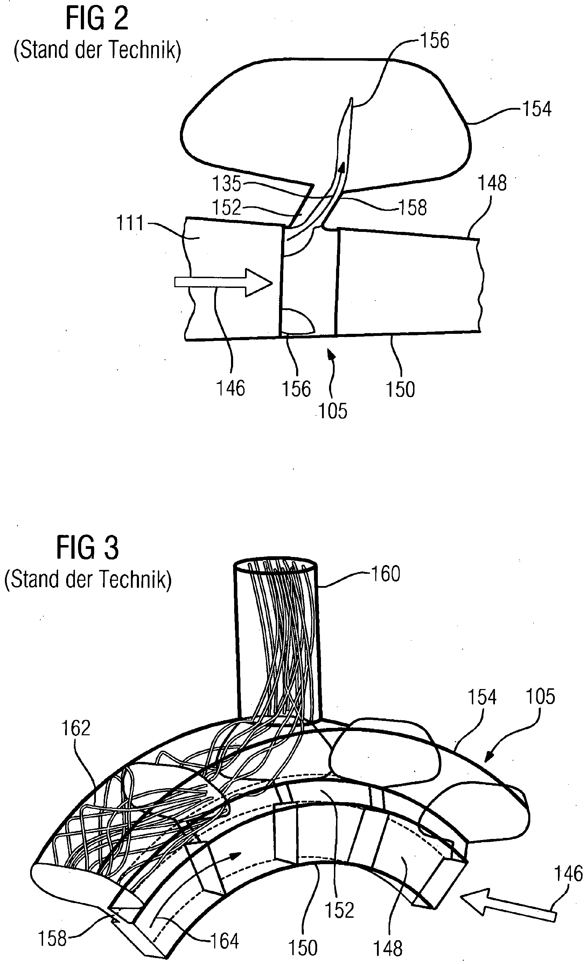

FIG 2 zeigt ausschnittsweise einen Längsschnitt durch den oberen Teil des Verdichters 105. Gezeigt ist der Hauptströmungskanal 111 im Bereich des Verdichters 105 mit der durch einen Pfeil 146 dargestellten Hauptströmungsrichtung, analog zu FIG 1 von links nach rechts. In der FIG 2 sind zur Vereinfachung keinerlei Lauf- und Leitschaufeln 120, 130 dargestellt, lediglich die radial äußere Verdichterwand 148 und die radial innere Verdichterwand 150 sind gezeigt.

Die radial äußere Verdichterwand 148 weist einen Spalt 152 auf, der in eine in der FIG 1 nicht gezeigte Entnahmeblase 154 mündet. FIG 2 zeigt eine Darstellung der bisher im Stand der Technik üblichen Entnahmeblasen 154. Die Entnahmeblase weist einen unregelmäßigen, trapezoiden Längsschnitt mit abgerundeten Ecken auf. Hierbei beträgt die Ausdehnung der Entnahmeblase 154 in axialer Richtung etwa das Eineinhalbfache der Ausdehnung in radialer Richtung. Die längere Grundfläche des Trapezoids ist dabei dem Hauptströmungskanal 111 zugewandt.

Der Spalt 152 mündet mittig in die längere Grundfläche des Trapezoids der Entnahmeblase 154. Er ist in stromabwärtiger Richtung zum Hauptströmungskanal 111 hin geneigt, so dass Luft aus dem Hauptströmungskanal 111 leichter in den Spalt 152 strömen kann. Der dargestellte Längsschnitt der Entnahmeblase 154 und des Spalts 152 ist identisch entlang des gesamten Umfangs der Gasturbine 100, so dass die Entnahmeblase 154 torusartig um die Achse 102 der Gasturbine 100 verläuft und der Spalt 152 einen ringscheibenförmigen Raum bildet, der den Hauptströmungskanal 111 entlang des gesamten Umfangs mit der Entnahmeblase 154 verbindet.

Zweck der Entnahmeblase 154 ist die Bildung eines Reservoirs von Druckluft, die über einzelne Leitungen zur Kühlung in die Turbine 108 geführt wird. Diese Leitungen sind in FIG 2 nicht gezeigt. Luft 135 strömt aus dem Hauptströmungskanal 111 durch den Spalt 152 in die Entnahmeblase 154. Es können mehrere Entnahmeblasen 154 in axialer Richtung verteilt angeordnet sein, um Luft auf verschiedenen Druckniveaus zu entnehmen.

Zur in der FIG 2 gezeigten Entnahmeblase 154 wurden Modellrechnungen durchgeführt. Hierbei wurden zunächst die Bereiche 156 mit den höchsten Strömungsgeschwindigkeiten ermittelt, die in der FIG 2 dargestellt sind. Diese Bereiche liegen im Wesentlichen an den radialen Innen- und Außenseiten des Hauptströmungskanals 111 sowie an der verdichteraustrittsseitigen Wandung 158 des Spalts 152, von wo aus sich der dortige Bereich 156 in gerader Linie in die Entnahmeblase 154 fortsetzt.

Die Strömung aus dem Verdichter 105 in eine Entnahmeblase 154 nach dem Stand der Technik, wie in FIG 2 gezeigt, bildet somit einen Jet, der ähnlich einem Freistrahl in die Entnahmeblase strömt und auf der gegenüberliegenden Wand auftrifft. Wie bei einem Freistrahl üblich dissipiert dabei ein Großteil des dynamischen Druckes und geht somit verloren. Durch diesen Effekt geht also ein Großteil der Energie, die in der radialen Geschwindigkeitskomponente steckt, verloren.

Die FIG 3 zeigt eine perspektivische Ansicht der Entnahmeblase 154 aus FIG 2 aus schräger Richtung des Verdichtereintritts. Hierbei ist auch eine aus der Entnahmeblase 154 mündende, in radialer Richtung erstreckte Leitung 160 zur Entnahme von Druckluft aus der Entnahmeblase 154 gezeigt.

FIG 3 zeigt Stromlinien 162, die die Strömung der Luft in der Entnahmeblase 154 darstellen. Diese wurden ebenfalls mit entsprechenden Modellrechnungen ermittelt. Die Stromlinien 162 zeigen deutlich den in Umfangsrichtung 164 gerichteten Drall der entnommenen Luft, der durch die Drehung des Rotors 103 um die Achse 102 der Gasturbine 100 erzeugt wird. Dieser Drall bewirkt, dass ein Teil des Massenstroms einfach nur um den Verdichter 105 umläuft. Der Drall und damit der entsprechende dynamische Druck der Umfangskomponente der entnommenen Luft geht dabei verloren.

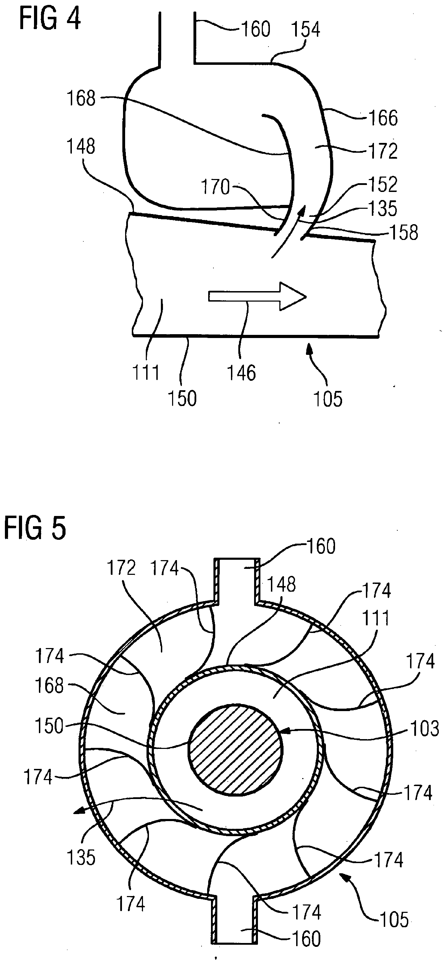

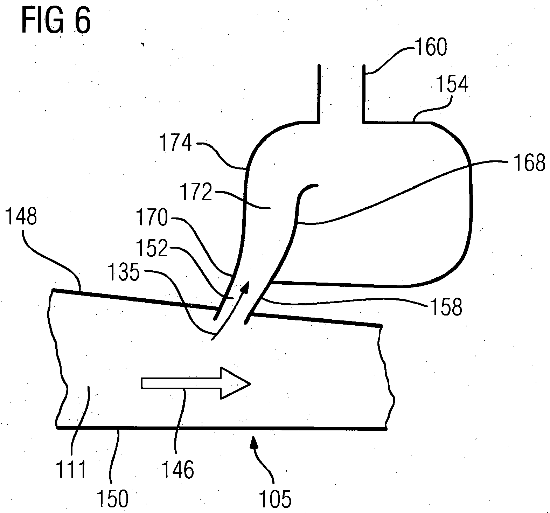

Die genannten Verluste an dynamischem Druck werden durch die in den FIG 4 und FIG 5 gezeigten konstruktiven Maßnahmen minimiert. Gleiches gilt für die in FIG 6 gezeigte alternative Ausgestaltung der Entnahmeblase 154. Die in der FIG 4 gezeigte Entnahmeblase 154 wird anhand ihrer Unterschiede zu FIG 2 erläutert.

Die Entnahmeblase 154 der FIG 4, die ebenfalls im Längsschnitt dargestellt ist, ist gegenüber der Entnahmeblase 154 der FIG 2 und 3 in axialer Richtung zum Verdichtereintritt hin verschoben. Dadurch mündet der Spalt 152, der ansonsten gleich ausgestaltet ist, nicht in der axialen Mitte der Entnahmeblase 154, sondern an deren verdichteraustrittsseitigem Ende. Die verdichteraustrittsseitige Wandung 158 des Spalts geht dabei stetig in im Wesentlichen radialer Richtung in die verdichteraustrittsseitige Wandung 166 der Entnahmeblase 154 über.

Weiterhin ist eine Führungslippe 168 in der Entnahmeblase 154 angeordnet, die sich im Längsschnitt ebenfalls in im Wesentlichen radialer Richtung nach außen erstreckt. Die verdichtereintrittsseitige Wandung 170 des Spalts 152 geht dabei stetig in die Führungslippe 168 über. Die Führungslippe 168 erstreckt sich über mehr als die halbe radiale Ausdehnung der Entnahmeblase 154. Der Abstand der Führungslippe 168 zur verdichteraustrittsseitigen Wandung 166 der Entnahmeblase 154 vergrößert sich radial nach außen. Dadurch ergibt sich im Spalt 152 und dem daran anschließenden Bereich zwischen Führungslippe 168 und verdichteraustrittsseitiger Wandung 166 der Entnahmeblase 154 eine Diffusorstrecke 172.

Analog wie in FIG 2 ist auch der Längsschnitt der Entnahmeblase 154 aus der FIG 4 inklusive der Führungslippe 168 identisch entlang des Umfangs der Gasturbine 100. Dies gilt lediglich nicht für die Leitung 160 zur Entnahme der Druckluft, die in FIG 4 ebenfalls gezeigt ist. Durch die gewonnene Diffusorstrecke 172 wird dynamischer Druck aus der radialen Geschwindigkeitskomponente zurück gewonnen.

Um auch dynamischen Druck aus der Umfangsgeschwindigkeit der Entnahmeströmung zurück zu gewinnen, sind weiterhin Strömungsleitbleche 174 in die gezeigte Diffusorstrecke 172 eingebracht, die in FIG 5 dargestellt sind. Die FIG 5 zeigt einen Querschnitt durch den Verdichter 105 der Gasturbine im Bereich des Spalts 152. Die Strömungsleitbleche 174 erstrecken sich in axialer Richtung über die gesamte Diffusorstrecke 172, d. h. von verdichtereintrittsseitiger Wandung 170 des Spalts 152 und Führungslippe 168 zur verdichtungsaustrittsseitiger Wandung 158, 166 von Spalt 152 und Entnahmeblase 154, ebenso in radialer Richtung.

Die Leitbleche 172 sind im Querschnitt radiärsymmetrisch angeordnet, in der FIG 5 sind neun Strömungsleitbleche 172 dargestellt. Die im Spalt 152 angeordneten Endabschnitte der Strömungsleitbleche 172 sind im Wesentlichen in Umfangsrichtung ausgerichtet. Daran anschließend ist das jeweilige Strömungsleitblech 172 derart gekrümmt, dass der im Bereich der Spitze der Führungslippe 168 angeordnete Endabschnitt im Wesentlichen radial ausgerichtet ist. Die skizzierten Strömungsleitbleche 172 bewirken, dass ein Teil des dynamischen Drucks der Umfangsgeschwindigkeit in statischen Druck umgewandelt wird und so zurück gewonnen wird.

FIG 5 zeigt skizzenhaft zur Verdeutlichung weitere Bauteile der Gasturbine 100 wie z. B. den Rotor 103, den Hauptströmungskanal 111, die Leitungen 160 aus der Entnahmeblase 154 sowie die Strömungsrichtung der Luft 135 in der Diffusorstrecke 172. Die Führungslippe 168 ist mit den Strömungsleitblechen 172 mit der äußeren Verdichterwand 148 verschraubt.

FIG 6 zeigt eine alternative Ausführungsform der Entnahmeblase 154, die anhand der Unterschiede zur Ausführungsform der FIG 4 und zum Stand der Technik nach den FIG 2 und FIG 3 beschrieben wird. Nicht näher beschriebene Bauteile sind ebenso angeordnet und ausgeführt wie in FIG 4.

Die Entnahmeblase 154 der FIG 6, die ebenfalls im Längsschnitt dargestellt ist, ist gegenüber der Entnahmeblase 154 der FIG 2 und 3 in axialer Richtung zum Verdichteraustritt hin verschoben. Dadurch mündet der Spalt 152, der ansonsten gleich ausgestaltet ist, nicht in der axialen Mitte der Entnahmeblase 154 oder an deren verdichteraustrittsseitigem Ende wie in der Ausführungsform der FIG 4, sondern an deren verdichtereintrittsseitigem Ende. Die verdichtereintrittsseitige Wandung 170 des Spalts 152 geht dabei stetig und stufenfrei in im Wesentlichen radialer Richtung in die verdichtereintrittsseitige Wandung 174 der Entnahmeblase 154 über.

Die Führungslippe 168 ist in der Entnahmeblase 154 so angeordnet, dass die verdichteraustrittsseitige Wandung 158 des Spalts 152 dabei stetig und stufenfrei in die Führungslippe 168 übergeht. Der Abstand der Führungslippe 168 zur verdichtereintrittsseitigen Wandung 174 der Entnahmeblase 154 vergrößert sich radial nach außen. Dadurch ergibt sich auch hier im Spalt 152 und dem daran anschließenden Bereich zwischen Führungslippe 168 und verdichtereintrittsseitiger Wandung 174 der Entnahmeblase 154 eine Diffusorstrecke 172.

Die Strömungsleitbleche 174 der FIG 5 sind ebenso in der Ausführungsform der FIG 6 in die gezeigte Diffusorstrecke 172 eingebracht.

## Patentansprüche

1. Verdichtergehäuse für eine Gasturbine (100) mit einer von einem Verdichtereintritt zu einem Verdichteraustritt gerichteten Hauptströmungsrichtung, umfassend eine einen Hauptströmungskanal (111) umschließende Verdichterwand (148), eine sich von dem Hauptströmungskanal (111) durch die Verdichterwand (148) getrennt angeordnete Luftentnahmeblase (154), wobei Hauptströmungskanal (111) und Luftentnahmebläse (154) durch einen in der Verdichterwand (148) angeordneten, in Umfangsrichtung verlaufenden Spalt (152) verbunden sind, und wobei
a) die verdichteraustrittsseitige Wandung (158) des Spalts (152) stufenfrei in die verdichteraustrittsseitige Wandung (166) der Luftentnahmeblase (154) übergeht oder
b) die verdichtereintrittsseitige Wandung des Spalts (152) stufenfrei in die verdichtereintrittsseitige Wandung der Luftentnahmeblase übergeht,
wobei in Fall a) die verdichtereintrittsseitige bzw. in Fall b) die verdichteraustrittsseitige Wandung (170) des Spalts (152) in eine in der Entnahmeblase (154) angeordnete, sich im Wesentlichen in radialer Richtung erstreckende Führungslippe (168) übergeht,
**dadurch gekennzeichnet, dass**
sich der Abstand der Führungslippe (168) von der in Fall a) verdichteraustrittsseitigen bzw. in Fall b) von der verdichtereintrittsseitigen Wandung (166) der Luftentnahmeblase (154) in radialer Richtung nach außen vergrößert.

2. Verdichtergehäuse nach Anspruch 1, bei dem die Mündung des Spalts (152) in die Entnahmeblase (154) in Fall a) im verdichteraustrittsseitigen bzw. in Fall b) im verdichtereintrittsseitigen Drittel der Entnahmeblase (154) angeordnet ist.

3. Verdichtergehäuse nach Anspruch 2, bei dem die Mündung des Spalts (152) in die Entnahmeblase (154) in Fall a) im verdichteraustrittsseitigen bzw. in Fall b) im verdichtereintrittsseitigen Viertel der Entnahmeblase (154) angeordnet ist.

4. Verdichtergehäuse nach einem der vorherigen Ansprüche, bei dem sich die Führungslippe (168) über zumindest die Hältte der radialen Ausdehnung der Luftentnahmeblase (154) ersteckt.

5. Verdichtergehäuse nach einem der vorherigen Ansprüche, bei dem zwischen Führungslippe (168) und in Fall a) verdichteraustrittsseitiger bzw. in Fall b) verdichtereintrittsseitiger Wandung (166) der Luftentnahmeblase (154) eine Anzahl von gekrümmten Strömungsleitblechen (172) angeordnet ist, deren radial innerer Endabschnitt in Umfangsrichtung ausgerichtet ist und deren radial äußerer Endabschnitt in radialer Richtung ausgerichtet ist.

6. Verdichtergehäuse nach einem der vorherigen Ansprüche, bei dem die Führungslippe (168) mit der Verdichterwand (154) verschraubt ist.

7. Verdichtergehäuse nach einem der vorhergehenden Ansprüche, bei dem sich die Luftentnahmeblase (154) im Wesentlichen torusförmig um den Hauptströmungskanal (111) erstreckt.

8. Verdichtergehäuse nach Anspruch 7, bei dem sich die Führungslippe (168) um den gesamten Umfang des Verdichters (105) erstreckt.

9. Verdichtergehäuse nach einem der vorherigen Ansprüche, bei dem die verdichteraustrittsseitige Wandung (158) des Spalts (152) im Längsschnitt in Richtung des Verdichteraustritts geneigt ist.

10. Verdichter (105) für eine Gasturbine (100) mit einem Verdichtergehäuse nach einem der vorhergehenden Ansprüche.

11. Gasturbine (100) mit einem Verdichter (105) nach Anspruch 10.

12. Kraftwerksanlage mit einer Gasturbine (100) nach Anspruch 11.

## Claims

1. Compressor housing for a gas turbine (100) having a main flow direction oriented from a compressor inlet to a compressor outlet, comprising a compressor wall (148) enclosing a main flow duct (111), an air bleed plenum (154) that is arranged separated from the main flow duct (111) by the compressor wall (148), wherein the main flow duct (111) and the air bleed plenum (154) are connected by a gap (152) arranged in the compressor wall (148) and running in the circumferential direction, and wherein
a) the compressor-outlet-side wall (158) of the gap (152) transitions in a step-free manner into the compressor-outlet-side wall (166) of the air bleed plenum (154), or
b) the compressor-inlet-side wall of the gap (152) transitions in a step-free manner into the compressor-inlet-side wall of the air bleed plenum,
wherein, in case a), the compressor-inlet-side or, in case b), the compressor-outlet-side wall (170) of the gap (152) transitions into a guide lip (168) that is arranged in the bleed plenum (154) and extends essentially in the radial direction,
**characterized in that**
the distance between the guide lip (168) and, in case a), the compressor-outlet-side or, in case b), the compressor-inlet-side wall (166) of the air bleed plenum (154) increases in the radially outward direction.

2. Compressor housing according to Claim 1, in which the mouth of the gap (152) into the bleed plenum (154) is arranged, in case a), in the compressor-outlet-side third or, in case b), in the compressor-inlet-side third of the bleed plenum (154).

3. Compressor housing according to Claim 2, in which the mouth of the gap (152) into the bleed plenum (154) is arranged, in case a), in the compressor-outlet-side quarter or, in case b), in the compressor-inlet-side quarter of the bleed plenum (154).

4. Compressor housing according to one of the preceding claims, in which the guide lip (168) extends over at least half of the radial extent of the air bleed plenum (14).

5. Compressor housing according to one of the preceding claims, in which there is arranged, between the guide lip (168) and, in case a), the compressor-outlet-side or, in case b), the compressor-inlet-side wall (166) of the air bleed plenum (154), a number of curved flow-guiding plates (172), whose radially inner end section is oriented in the circumferential direction, and whose radially outer end section is oriented in the radial direction.

6. Compressor housing according to one of the preceding claims, in which the guide lip (168) is screwed to the compressor wall (148).

7. Compressor housing according to one of the preceding claims, in which the air bleed plenum (154) extends essentially toroidally around the main flow duct (111).

8. Compressor housing according to Claim 7, in which the guide lip (168) extends over the entire circumference of the compressor (105).

9. Compressor housing according to one of the preceding claims, in which the compressor-outlet-side wall (158) of the gap (152) is inclined, in longitudinal section, in the direction of the compressor outlet.

10. Compressor (105) for a gas turbine (100), having a compressor housing according to one of the preceding claims.

11. Gas turbine (100) having a compressor (105) according to Claim 10.

12. Power plant having a gas turbine (100) according to Claim 11.

## Revendications

1. Carter de compresseur pour une turbine ( 100 ) à gaz ayant une direction d'écoulement principale dirigée d'une entrée du compresseur à une sortie du compresseur, comprenant une paroi ( 148 ) du compresseur entourant un canal ( 111 ) d'écoulement principal, un ballon ( 154 ) de prélèvement d'air séparé du canal ( 111 ) d'écoulement principal par la paroi ( 148 ) du compresseur, le canal ( 11 ) d'écoulement principal et le ballon ( 154 ) de prélèvement d'air communiquant par un intervalle ( 152 ) prévu dans la paroi ( 148 ) du compresseur et s'étendant dans la direction périphérique, et dans lequel
a) la paroi ( 158 ), du côté de la sortie du compresseur, de l'intervalle ( 152 ) se transforme sans gradin en la paroi ( 166 ), du côté de la sortie du compresseur, du ballon ( 154 ) de prélèvement d'air ou
b) la paroi, du côté de l'entrée du compresseur, de l'intervalle ( 152 ) se transforme sans gradin en la paroi, du côté de l'entrée du compresseur, du ballon de prélèvement d'air,
dans lequel, dans le cas a), la paroi ( 170 ) du côté de l'entrée du compresseur ou, dans le cas b), la paroi ( 170 ) du côté de la sortie du compresseur, de l'intervalle ( 152 ) se transforme en une lèvre ( 168 ) de guidage prévue dans le ballon ( 154 ) de prélèvement et s'étendant sensiblement dans la direction radiale,
**caractérisé en ce que**
la distance de la lèvre ( 168 ) de guidage à la paroi ( 166 ), dans le cas a), du côté de la sortie du compresseur, et, dans le cas b), du côté de l'entrée du compresseur, du ballon ( 154 ) de prélèvement d'air s'agrandit vers l'extérieur dans la direction radiale.

2. Carter de compresseur suivant la revendication 1, dans lequel l'embouchure de l'intervalle ( 152 ), dans le ballon ( 154 ) de prélèvement, est disposée dans le tiers, dans le cas a), du côté de la sortie du compresseur et, dans le cas b), du côté de l'entrée du compresseur, du ballon ( 154 ) de prélèvement.

3. Carter de compresseur suivant la revendication 2, dans lequel l'embouchure de l'intervalle ( 152 ) dans le ballon ( 154 ) de prélèvement est disposée dans le quart, dans le cas a), du côté de la sortie du compresseur et, dans le cas b), du côté de l'entrée du compresseur, du ballon ( 254 ) de prélèvement.

4. Carter de compresseur suivant l'une des revendications précédentes, dans lequel la lèvre ( 168 ) de guidage s'étend sur au moins la moitié de l'étendue radiale du ballon ( 154 ) de prélèvement d'air.

5. Carter de compresseur suivant l'une des revendications précédentes, dans lequel il est disposé, entre la lèvre ( 158 ) de guidage et la paroi ( 166 ), dans le cas a), du côté de la sortie du compresseur et, dans le cas b), du côté de l'entrée du compresseur, du ballon ( 154 ) de prélèvement d'air, un certain nombre de chicanes ( 172 ) incurvées, dont la partie d'extrémité intérieure radialement est dirigée dans la direction périphérique et dont la partie d'extrémité extérieure radialement est dirigée dans la direction radiale.

6. Carter de compresseur suivant l'une des revendications précédentes, dans lequel la lèvre ( 168 ) de guidage est vissée à la paroi ( 154 ) du compresseur.

7. Carter de compresseur suivant l'une des revendications précédentes, dans lequel le ballon ( 154 ) de prélèvement d'air s'étend sensiblement sous la forme d'un tore autour du canal ( 111 ) d'écoulement principal.

8. Carter de compresseur suivant la revendication 7, dans lequel la lèvre ( 168 ) de guidage s'étend autour de tout le pourtour du compresseur ( 105 ).

9. Carter de compresseur suivant l'une des revendications précédentes, dans lequel la paroi ( 158 ) du côté de la sortie du compresseur de l'intervalle ( 152 ) est inclinée en coupe longitudinale dans la direction de la sortie du compresseur.

10. Compresseur ( 105 ) pour une turbine ( 100 ) à gaz ayant un carter de compresseur suivant l'une des revendications précédentes.

11. Turbine ( 100 ) à gaz ayant un compresseur ( 105 ) suivant la revendication 10.

12. Centrale électrique ayant une turbine ( 100 ) à gaz suivant la revendication 11.
